# EUROPEAN PATENT APPLICATION

(11) **EP 1 508 848 A2**
(43) Date of publication of application: **23.02.2005**
(21) Application number: 04018950.8
(22) Date of filing: 10.08.2004
(51) Int. Cl.: G06F 1/00

(54) **Information processing apparatus**

(30) Priority: 21.08.2003 JP 2003297701
(71) Applicant: Kabushiki Kaisha Toshiba, Tokyo 105-8001 (JP)
(72) Inventor: Kokubun, Tomoyuki, Minato-ku Tokyo 105-8001 (JP); Ishigaki, Satoru, Minato-ku Tokyo 105-8001 (JP); Ishizaki, Kou, Minato-ku Tokyo 105-8001 (JP)
(74) Representative: Henkel, Feiler & Hänzel

(57) **Abstract**

An information processing apparatus comprises a communication unit (21) configured to communicate with a management device which manages the information processing apparatus, a management unit (211) configured to manage available time of the information processing apparatus based on given information received from the management device via the communication unit, and a control unit (22) configured to limit use of the information processing apparatus based on the available time managed by the management unit.

## Description

The present invention relates to an information processing apparatus that is favorable for an anti-theft mechanism for client personal computers provided on a network such as a LAN.

There are many security measures to protect data in a personal computer provided on a network such as a LAN.

There is a Kensington lock anti-theft mechanism as an anti-theft mechanism for a main unit of a personal computer serving as a client (client PC). The Kensington lock is effective against limiting the use. of the personal computer to outsiders (unspecified third parties). However, the Kensington lock is difficult to use in a normal use environment because it is accompanied by a physical combination. If the Kensington lock is particularly applied to a small-sized device to be easily carried, such as a mobile PC, its lock mechanism is complicated and thus causes a problem in normal use. Further, the security of the device itself needs to be taken into consideration against insiders as well as outsiders. In this respect, too, the Kensington lock is not effective because a user is usually provided with a key.

Japanese Patent Application. KOKAI Publication No. 8-305461 discloses a technique of inhibiting a device from operating normally unless it is authenticated by an authentication center via a communication line at regular time intervals such as for every fixed period and for each number of times of use and preventing the device from being authenticated by the authentication center by reporting a theft to the police if the device is stolen. However, the theft report is likely to cause human errors and make it difficult to maintain security with reliability.

As described above, conventionally, there are no effective anti-theft mechanisms to protect a personal computer main unit from theft in a normal use environment.

Embodiments of the invention may provide an information processing apparatus that protects a main unit from theft and prevents data from being leaked by unauthorized access.

In an embodiment of the invention, there is provided an information processing apparatus, comprising a communication unit configured to communicate with a management device which manages the information processing apparatus; a management unit configured to manage available time of the information processing apparatus based on given information received from the management device via the communication unit; and a control unit configured to limit use of the information processing apparatus based on the available time managed by the management unit.

In another embodiment of the invention, there is provided an information processing method for an information processing apparatus, comprising updating and managing a last startup date of the information processing apparatus; comparing the last startup date with a present date managed by the information processing apparatus to determine whether the present date is before the last startup date; and limiting use of the information processing apparatus when it is determined when the present date is before the last startup date.

In an embodiment, an information processing apparatus, comprises a communication unit configured to communicate with a management device, wherein the. management device manages the information processing apparatus, a management unit within the information processing apparatus configured to manage available time of the information processing apparatus based on date and time information received from the management device via the communication unit, and a control unit within the information processing apparatus configured to limit use of the information processing apparatus based on the available time managed by the management unit.

In another embodiment, an information processing method comprises communicating with a management device, wherein the management device manages the information processing apparatus, managing available time of the information processing apparatus based on date and time information received from the management device via a communication unit, and limiting use of the information processing apparatus based on the available time managed by a management unit.

In a further embodiment, an information processing apparatus, comprises means for communicating with a management device, wherein the management device manages the information processing apparatus, means for managing available time of the information processing apparatus based on date and time information received from the management device via the means for communicating, and means for limiting use of the information processing apparatus based on the available time managed by the means for managing.

In yet another embodiment, an article of manufacture comprises a computer usable medium having computer readable program code embodied therein. The computer readable program code comprises computer readable program code configured to communicate with a management device, wherein the management device manages the information processing apparatus, computer readable program code configured to manage available time of the information processing apparatus based on date and time information received from the management device, and computer readable program code configured to limit use of the information processing apparatus based on the available time.

For purposes of summarizing the invention, certain aspects, advantages and novel features of the invention have been described herein. It is to be understood that not necessarily all such advantages may be achieved in accordance with any particular embodiment of the invention. Thus, the invention may be embodied or carried out in a manner that achieves or optimizes one advantage or group of advantages as taught herein without necessarily achieving other advantages as may be taught or suggested herein.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration and main components of a system according an embodiment of the invention;
FIG. 2 is a block diagram showing main components of a client PC according to an embodiment of the invention;
FIG. 3 is a flowchart showing a procedure for performing startup inhibition control of a BIOS according to an embodiment of the invention;
FIG. 4 is a flowchart showing a procedure for executing a startup inhibition control program of an OS according to an embodiment of the invention; and
FIG. 5 is a flowchart showing a procedure for performing startup inhibition control of a BIOS according to an embodiment of the invention.

Prior to detailed descriptions of the embodiments of the invention, the basic concept indicated by the embodiments will be explained.

While a client personal computer (referred to as a client PC) is connected to an authorized server through a network such as a LAN, it can be used normally. In an embodiment, when the client PC falls out of its use environment, its system startup is inhibited. This startup inhibition function is fulfilled by both a BIOS (basic I/O system) in the client PC and a program managed by the operating system (OS). The BIOS performs a process such as a check on the expiration date. The other processes, such as information acquisition and date updating by communication with the server, are left to the program managed by.the OS. The startup inhibition function can thus easily be carried out.

The server sets an expiration date in the client PC. Whenever the client PC is connected to the server, the server sends management information of the expiration date to the client PC. For communications between the client PC and the server, in an embodiment, it is desirable to use an encryption scheme such as the RSA (Rivest Shamir Adleman) scheme.

The client PC manages information such as an expiration data and the last updating date on a nonvolatile secret area managed by the BIOS.

When the system starts up, the BIOS compares the above management information with information of the present date indicated by an RTC (real-time clock) in the client PC to determine whether the system starts up or is inhibited from starting up. If the client PC falls within the expiration date, the OS starts up to update the management information by communication with the server. If the use of the client PC expires, the system is inhibited from starting up. The BIOS determines whether the system starts up or is inhibited from starting up as well as makes a check to prevent an unauthorized use, e.g., to put back the RTC. While the system is in the startup inhibition state, it does not start or it can release the state in response to the entry of an administrator's password. In either case, additional measures are prepared such that the administrator can reset and restart the system.

When a user logs on the system, the program managed by the OS confirms SSID (service set identification) of the server. Then, the program receives expiration date information in accordance with a given protocol and supplies the BIOS with the expiration date information as well as the present date through a special interface.

The BIOS stores the received information in the secret area managed by the BIOS itself. The BIOS receives information of the present date managed by the server as well as the information of the expiration date and sets the information in the RTC in the PC. In an embodiment, this process is performed first. If, however, the RTC is put back for an unauthorized use in the subsequent process, the system is placed into a startup inhibition mode through a check on the last startup date or the last startup date and time.

It is possible to set the above date as an expiration date in addition to setting available time of the PC (time for allowing the PC to be used without being connected with the server). In this case, the available time (eight hours, forty hours, etc.) is managed on the secret area of the BIOS. The BIOS confirms whether the PC is connected to an authentication server when the system starts up or while it is starting up. When the PC is not connected, the available time is shortened on the secret area. When the available time becomes "0," the BIOS inhibits the system from starting up or forcefully shuts down the system.

To release the above startup inhibition state manually, for example, an administrator starts up a PC that has made a transition to a startup inhibition state and inputs a password, which is set for the administrator for each.PC and different from that of a user. This password is also stored in the secret area of the BIOS. To release the startup inhibition state.automatically, the BIOS starts up a PC that has made a transition to a startup inhibition state using a minimum device that is used for re-authentication such as a LAN adapter and an HDD (the unauthorized use of the PC is suppressed by inhibiting the use of an unnecessary display device or the like). If an authentication program can gain access to the authentication server when the PC starts up, for example, an expiration date is set again and the PC is restarted. Since the expiration date is extended after the restart, the startup inhibition state is released to allow the PC to be used normally.

Since the third party can execute the program managed by the OS, an install flag of the program is set on the secret area of the BIOS to inhibit the .programs from being changed and maintain its security. When the program is installed on the client PC, the system notifies the BIOS of the install of the program. The BIOS stores flag information indicative of the install in the secret area. The program confirms whether the flag is on or not when it is installed. The program is so designed that it can be neither installed nor uninstalled if the flag is on. The unauthorized use of the program can thus be prevented. The flag can be reset by the entry of a supervisor password of the BIOS.

The program managed by the OS is.stored in a program storage area (usually an HDD) whose program can be rewritten by the third party. The startup inhibition function can thus be invalidated by rewriting the program or replacing the HDD. In order to avoid this, the BIOS has a boot limit counter in the secret area. The program notifies the BIOS that the program is correctly installed each time the system starts up. Whenever the BIOS receives the above notification, the counter is reset to the initial value. The BIOS adds/subtracts values of the counter when the system shuts down. If the above notification is not made but the values of the counter are fixed after the startup is repeated several times, for example, five times, the BIOS determines that the PC is illegally used and inhibits the subsequent startup of the system. It is therefore possible to prevent the unauthorized use of the PC due to rewriting of the program, replacement of the HDD for each OS, and the like.

In another embodiment, as another process of eliminating unauthorized use due to the HDD replacement, an HDD serial number is stored in the secret area of the BIOS to confirm that the HDD is authorized each time the system starts up. The BIOS stores a serial number, a hash value, or other unique information of the HDD connected to the client PC in the secret area. After that, the BIOS compares a serial number of an HDD with the value (HDD serial number) stored in the secret area whenever the system starts up. If they differ from each other, the BIOS places the system into a startup inhibition state. The unauthorized use due to the HDD replacement is inhibited accordingly.

When an authentication procedure between the PC and the server fails, it is possible to inhibit the PC from being used on a standalone basis immediately, without allowing the PC to be used on a standalone basis for a fixed period of time. If the above program cannot authenticate the server correctly when the system starts up, the program notifies the BIOS of startup inhibition to shut down the system at once.

Embodiments of the invention will now be described with reference to the accompanying drawings.

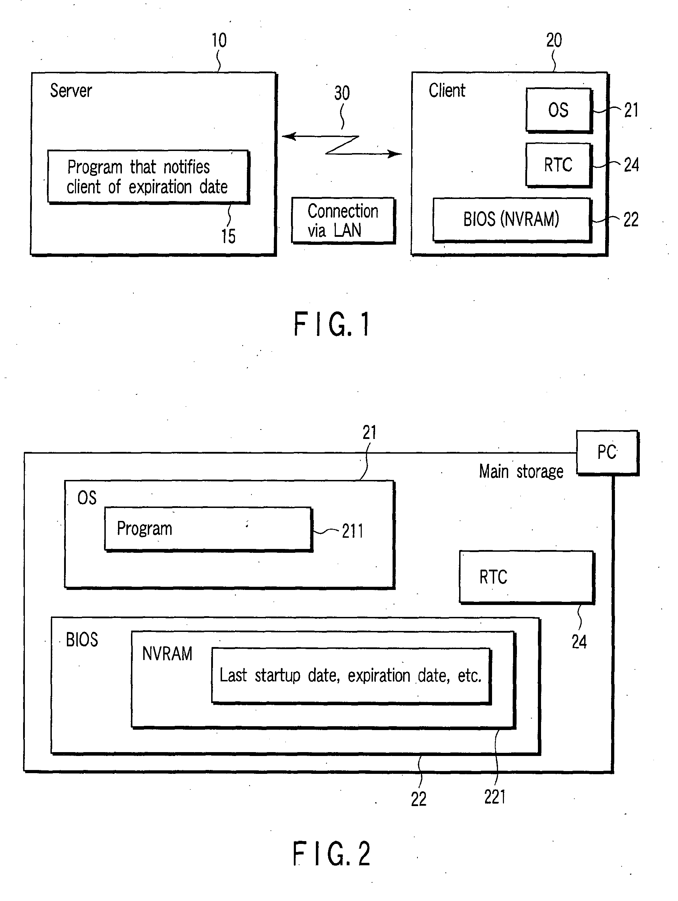

FIG. 1 shows a configuration and main components of a system according to an embodiment of the invention. This system is an example of a LAN-connected client/server system. In FIG. 1, reference numeral 10 indicates a server, 20 shows a client PC and 30 denotes a LAN. FIG. 2 shows main components of the client PC 20.

The server 10 and client PC 20 are connected to each other via the LAN 30. The server 10 includes a program 15 to notify the client PC of an expiration date. The client PC 20 includes an operating system (OS) 21, a BIOS 22 and an RTC 24 as the main components, as shown in FIG. 2.

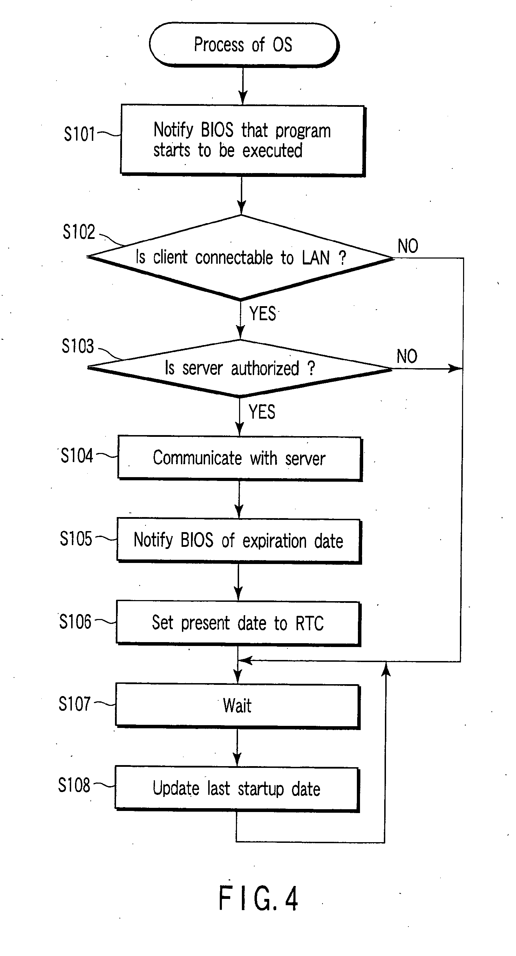

The OS 21 includes a program 211 for startup inhibition control (referred to as a startup inhibition control program). When the system starts up to start the client PC 20, the program 211 performs a procedure for authenticating the client PC 20 with the server 10 through the LAN 30, acquires information to manage available time from the server 10, sends the acquired information to the BIOS 22, and updates the last startup date, an expiration date and the like, which are stored in a secret area (NVRAM) 221 of the BIOS 22. A procedure for executing the startup inhibition control program 211 of the OS 21 is shown in FIG. 4.

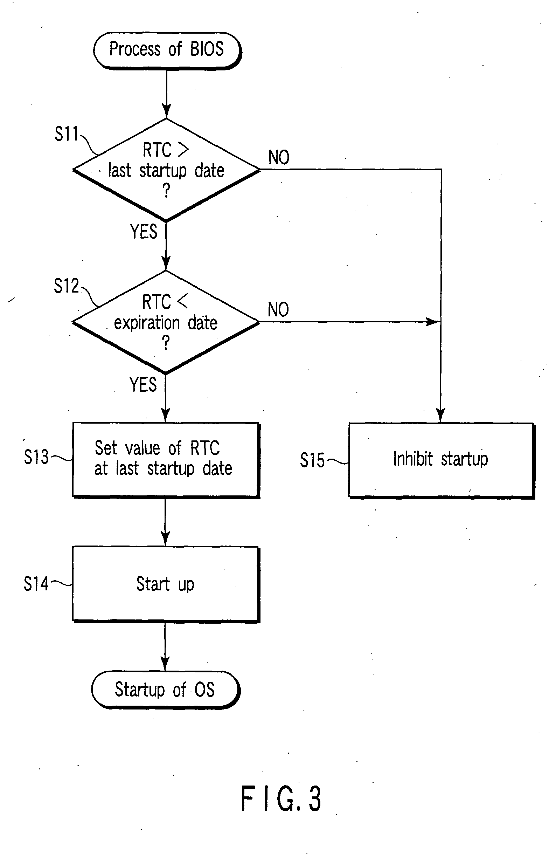

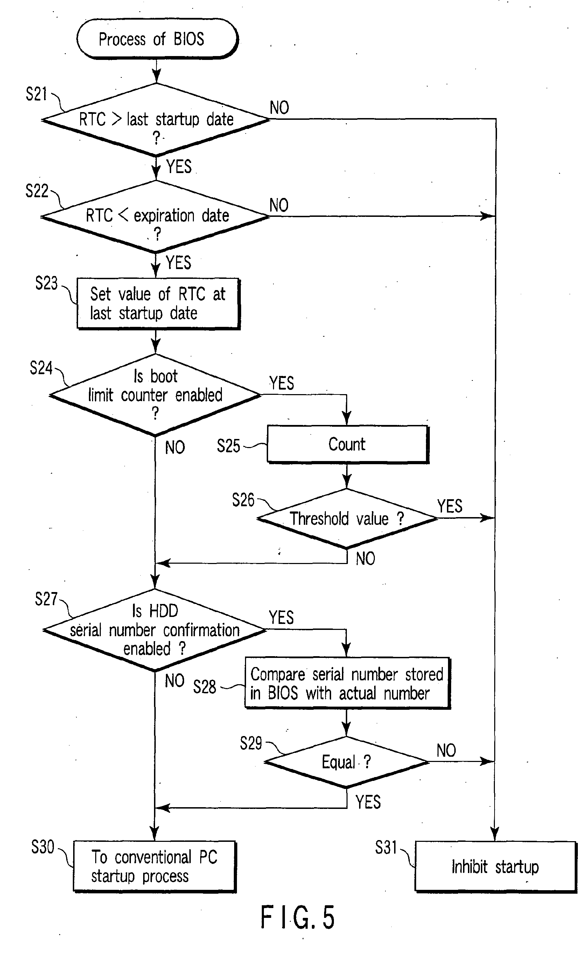

The secret area (NVRAM) 221 is formed by a nonvolatile memory managed by the BIOS 22 and has fields for managing the last startup date, an expiration date and the like. Each of the fields is updated and controlled by the startup inhibition control program 211 in the OS 21. FIG. 3 shows a procedure for performing startup, inhibition control of the BIOS 22 according to an embodiment, and FIG. 5 shows a procedure for performing startup inhibition control of the BIOS 22 according to another embodiment.

The RTC 24 has the same function as that of an RTC provided in a normal personal computer (PC). In an embodiment, the startup inhibition control program 211 is executed to set the present date and time acquired by the server 10. When the system starts up, the BIOS 22 refers to the present date and time.

When a client PC 20 requests the server 10 to be connected to the client PC 20 for authentication, the program 15 in the server 10 supplies the client PC 20 with information which the client PC 20 uses to manage its available time or distributes the information to each of client PCs 20 connected to the LAN 30. In an embodiment, whenever the client PC 20 normally requests the server 10 to perform an authentication process, the server 10 supplies the client PC 20 with information that the client PC 20 uses to manage its available time.

The above information includes an expiration date and the present date and time managed by the server 10 (measured by the RTC in the server). The expiration date can be represented by the absolute date (month and day) and by an available time period (for X days). In an embodiment, the available time period is used as the expiration date.

When the server 10 completes an authentication procedure with the client PC 20, it notifies the client PC 20 of information of the present date and available time (expiration date) managed by the server 10.

When the client PC 20 completes the authentication procedure when it is connected to the LAN 30, it receives the information of the present date and available time from the server 10 and manages the available time based on the information. Whenever the system starts up, the client PC 20 determines whether the startup should be limited or not.

According to an embodiment of the invention, the startup inhibition control program 211 in the OS 21 provided in the client PC 20 notifies the BIOS 22 that the program 211 starts to be executed when the system starts up (step S101 in FIG. 4). Then, the BIOS 22 determines whether the client PC 20 can be connected to the LAN 30 (step S102). If it can be connected to the LAN 30 (YES in step S102), the client PC 20 performs an authentication procedure according to a given protocol with the server 10 and determines whether the server 10 is authorized or not (step S103).

If the client PC 20 confirms that the server 10 is authorized (YES in step S103), it communicates with the server 10 and acquires an expiration date that defines available time and the present date managed by the server 10 (step S104). The client PC 20 notifies the BIOS 22 of the expiration date (step S105) and then set the present date to the RTC 24 (step S106).

After the subsequent startup, the last startup date is updated by a given read/write operation on a field of the last startup date formed in the secret area (NVRAM) 221 of the BIOS 22 (steps S107 and S108).

The BIOS 22 sets the expiration date sent by the startup inhibition control program 211 in a field of the expiration date formed in the secret area (NVRAM) 221. Then, the BIOS 22 compares the present date of the RTC 24 and the last startup date stored in the secret area (NVRAM) 221 to determine whether the present date of the RTC 24 is after the last startup date (step S11 in FIG. 3).

If the present date of the RTC 24 is before the last startup date (NO in step S11), the BIOS 22 determines that the client PC 20 is illegally used by the date setting operation of the RTC 24, performs a startup inhibition process (step S15), and places the system in startup inhibition mode. Thus, the subsequent system startups become invalid and the client PC 20 becomes unavailable.

If the present date of the RTC 24 is after the last startup date (YES in step S11), the BIOS 22 determines that no date setting operation of the RTC 24 is performed. Then, the BIOS 22 compares the present date of the RTC 24 and the expiration date stored in the secret area (NVRAM) 221 to determine whether the present date is before the expiration date (step S12).

If the present date of the RTC 24 is not before the expiration date (NO in step S12), the BIOS 22 performs a startup inhibition process (step S15) and places the system in startup inhibition mode. The subsequent system startups become invalid and the client PC 20 becomes unavailable.

If the present date of the RTC 24 is before the expiration date (YES in step S12), the last startup date stored in the secret area (NVRAM) 221 is updated to the present date of the RTC 24 (step S13). After that, the BIOS 22 performs a startup process (step S14) to start up the system. Various application programs can thus be executed under the control of the OS 21.

FIG. 5 shows a procedure for performing startup inhibition control of the BIOS 22 according to another embodiment of the invention.

The process shown in FIG. 5 differs from that shown in FIG. 4 chiefly in that it has a function of confirming the validity of the startup inhibition control program 211 in addition to the function of eliminating the use of the client PC 20 by an unauthorized operation of the RTC 24. In other words, the BIOS 22 has a function of eliminating unauthorized use of the client PC 20 due to rewriting of the program 211, replacement of the HDD and the like. The function of eliminating unauthorized use due to the rewriting of the program 211 is carried out by the determination process in steps S24 to S26 shown in FIG. 5. The function of eliminating unauthorized use due to the replacement of the HDD is done by the determination process in steps S27 to S29 shown in FIG. 5.

In an embodiment, a field for a boot limit counter for limiting the number of times of startup and a field for a management number (HDD serial number) of the hard disk drive (HDD) as well as the above-described field are set on the secret area (NVRAM) 221 in the BIOS 22.

The startup inhibition control program 211 notifies the BIOS 22 that the program is correctly installed whenever the system starts up.

Whenever the BIOS 22 receives the above notification from the startup inhibition control program 211, it resets the boot limit counter to the initial value. In other words, the boot limit counter is disabled (NO in step S24).

Whenever the system shuts down, the BIOS 22 increments (+1) a value of the boot limit counter (step S25).

When the BIOS 22 does not received the above notification and the value of the boot limit counter becomes a fixed one, for example, "5", after some startups are repeated (no notification after five startups) (YES in step S26), the BIOS 22 determines that the client PC is unauthorized and then inhibits the subsequent startups (step S31). It is thus possible to eliminate the unauthorized use due to the rewriting of the program 211, the replacement of the HDD for each OS, and the like.

In an embodiment, the BIOS 22 stores the HDD serial number in the secret area (NVRAM) 221 and confirms whether the HDD is authorized each time the system start up.

Whenever the system starts up, the BIOS 22 acquires a serial number of the HDD and compares the serial number with the HDD serial number stored in the secret area (NVRAM) 221 (steps S27 and S28). If the numbers differ from each other (NO in step S29), the BIOS 22 determines that the HDD is illegally replaced and inhibits the startup of the system (step S31). The unauthorized use due to the replacement of the HDD can thus be inhibited.

Since the other processes can easily be understood from the first embodiment described above, their descriptions are omitted here.

The procedures according to the above embodiments can be stored in a computer-readable storage medium, such as, for example, a magnetic disk, an optical disk, a semiconductor memory, and the like, as computer programs, such as, for example, codes, and the like, and read out by a computer (processor). These computer programs can be distributed.from a computer to another one via a communication medium.

As described above, the embodiments of the invention can protect a main unit from theft and prevent data from being leaked by unauthorized access.

## Claims

1. An information processing apparatus, **characterized by** comprising:
a communication unit (30, 21) configured to communicate with a management device, wherein the management device manages the information processing apparatus;
a management unit (211) within the information processing apparatus configured to manage available time of the information processing apparatus based on date and time information received from the management device via the communication unit; and
a control unit (22) within the information processing apparatus configured to limit use of the information processing apparatus based on the available time managed by the management unit.

2. The information processing apparatus of claim 1, **characterized in that** the control unit (22) comprises a processing unit (22) configured to manage the available time in a specific area.

3. The information processing apparatus of claim 1, **characterized in that** the date and time information comprises at least one of a present date, a present time, an expiration date, and an available time period.

4. The information processing apparatus of claim 2, **characterized in that** the control unit (22) is further configured to inhibit the use of the information processing apparatus based on the date and time information stored in the specific area.

5. The information processing apparatus of claim 4, **characterized in that** the processing unit (22) comprises:
a unit configured to store in the specific area and manage a last date at which a system starts up as a last startup date;
a unit configured to store in the specific area. and manage date and time information used for managing the available time as an expiration date;
a unit configured to compare the last startup date and a present date managed in the information processing apparatus;
a unit configured to compare the expiration date and the present date;
a unit configured to update the last startup date to the present date when the present date is after the last startup date and the present date is before the expiration date; and
a unit configured to start up the system when the present date is after the last startup date and the present date is before the expiration date.

6. The information processing apparatus of claim 5, **characterized in that** the unit configured to start up the system is further configured to inhibit the system from starting up when the present date is before the last startup date.

7. The information processing apparatus of claim 5, **characterized in that** the unit configured to start up the system is further configured to inhibit the system from starting up when the present date is after the expiration date.

8. The information processing apparatus of claim 2, **characterized in that** the communication unit (30, 21) is further configured to perform an authentication procedure with the management device, then acquire the date and time information from the management device and send the date and time information to the processing unit.

9. The information processing apparatus of claim 8, **characterized in that** the communication unit (30, 21) is further configured to receive at least a portion of the date and time information from the management device as encrypted information.

10. The information processing apparatus of claim 8, **characterized in that** the management unit (211) comprises:
a unit configured to set a present date in a timer provided in the information processing apparatus;
a unit configured to notify the processing unit of the date and time information; and
a unit configured to update a last startup date set in the specific area managed by the processing unit.

11. The information processing apparatus of claim 4, **characterized in that** the management unit (211) is further configured to set a limit time in the specific area that limits an information processing apparatus operation time, update the limit time in accordance with an operation of the apparatus, and notify the processing unit of the updated limit time upon receipt of the date and time information from the communication unit.

12. The information processing apparatus of claim 4, **characterized in that**
the management unit (211) is further configured to notify the management device with a notification that the management unit is authorized, and
the processing unit (22) is further configured to hold number information in the specific area for limiting use of the information processing apparatus based on the notification, update the number information in accordance with a completion of an operation of the information processing apparatus, and inhibit the information processing apparatus from being used when the number information reaches a value for limiting use of the information processing apparatus.

13. The information processing apparatus of claim 4, **characterized in that** the processing unit (22) is further configured to store in the specific area information unique to a storage medium, determine whether the storage medium is authorized based on the information unique to the storage medium, and inhibit the information processing apparatus from being used when the storage medium is not authorized, wherein the storage medium stores a procedure of the management unit.

14. An information processing method, **characterized by** comprising:
communicating with a management device, wherein the management device manages the information processing apparatus (S104);
managing available time of the information processing apparatus based on date and.time information. received from the management device via a communication unit (S105 to S108); and
limiting use of the information processing apparatus based on the available time managed by a management unit (S11 to S15; S21 to S31).

15. The information processing method of . claim 14, **characterized by** further comprising:
updating and managing a.last startup date of the information processing apparatus (S108);
comparing the last startup date with a present date managed by the information processing apparatus (S11; S21); and
limiting use of the information processing apparatus when the present date is before the last startup date (S15; S31).

16. The information processing method of claim 15, **characterized by** further comprising:
managing an expiration date that limits the use of the information processing apparatus, wherein the expiration date is managed by the information processing apparatus (S105);
comparing the expiration date managed by the information processing apparatus with the present date managed by the information processing apparatus (S12; S22); and
limiting the use of the information processing apparatus when the present date is after the expiration date (S15; S31).

17. The information processing method of claim 16, **characterized by** further comprising:
acquiring an expiration date managed by a management device from the management device, wherein the management device manages the information processing apparatus (S104); and
setting the expiration date acquired from the management device as the expiration date in the information processing apparatus (S105).

18. The information processing method of claim 17, **characterized by** further comprising:
acquiring a present date managed by the management device from the management device (S104); and
setting the present date acquired from the management device as the present date in the information processing apparatus (S106).

19. The information processing method of claim 18, **characterized by** further comprising updating the last startup date in accordance with an operation of the information processing apparatus after the present date acquired from the management device is set as the present date in the information processing apparatus (S108).

20. The information processing method of claim 15, **characterized by** further comprising:
managing unique information of a storage medium, wherein the storage medium is used in the management of the last startup date (S23 to S29);
determining whether the storage medium is authorized using the managed unique information when the information processing apparatus operates (S26, S29); and
inhibiting the information processing apparatus from operating when the storage medium is not authorized (S31).

21. The information processing method of claim 16, **characterized by** further comprising:
managing unique information of a storage medium, wherein the storage medium is used in the management of the expiration date (S23 to S29);
determining whether the storage medium is authorized using the managed unique information when the information processing apparatus operates (S26, S29); and
inhibiting the information processing apparatus from operating when the storage medium is not authorized (S31).
